Europäisches Patentamt

European Patent Office

Office européen des brevets

(11) Publication number: **0 437 947 A2**

# EUROPEAN PATENT APPLICATION

(21) Application number: 90313655.4

(22) Date of filing: 14.12.90

(51) Int. Cl.5: **G11B 5/596**

(30) Priority: 09.01.90 US 462671

(43) Date of publication of application:
24.07.91 Bulletin 91/30

(84) Designated Contracting States:
DE FR GB

(71) Applicant: **International Business Machines
Corporation
Old Orchard Road
Armonk, N.Y. 10504(US)**

(72) Inventor: **Glaser, Thomas William**
Route 8, Box 183
Rochester, Minnesota 55902(US)
Inventor: **Greenberg, Richard**
748 Northern Hills Drive N.E.
Rochester, Minnesota 55904(US)
Inventor: **Schopp, Robert Ellsworth**
2712 17th Avenue N.W:
Rochester, Minnesota 55901(US)

(74) Representative: **Mitchell, Allan Edmund et al
IBM United Kingdom Limited Intellectual
Property Department Hursley Park
Winchester Hampshire SO21 2JN(GB)**

(54) Writing servo patterns in a DASD device.

(57) Track following servo patterns are written to the disks 14 of a DASD unit after the unit has been completely assembled, using the DASD's voice coil motor and transducing head assembly 32, 34, 36, 37. Before assembling the DASD unit a servo reference surface is recorded on one of the disks. This reference surface contains the track following servo patterns and the clocking information that is required for subsequently recording servo patterns on the recording surfaces of all of the disks. After the DASD unit has been fully assembled, and sealed, its access motor and transducing head assembly is used to read the reference surface. Thereafter servo patterns are written to the remaining disks, again using the DASD's access motor and transducing head assembly. The servo reference surface may be recorded on one of the disks during full surface testing of the disks thereby eliminating the need to use a servo writer.

FIG. I.

# WRITING SERVO PATTERNS IN A DASD DEVICE

## Field of the Invention

The present invention pertains to the field of direct access storage devices (DASD), and more particularly to an improved construction and arrangement for writing servo tracks on the disk(s) of such a device.

Typical data processing installations make use of a hierarchy of storage means to store data for use in the data processing applications that are serviced by the data processing installation. One of the most useful storage means in contemporary use are rigid magnetic recording disk files. In practice, one or more magnetic recording disks are placed in a housing of a disk file or drive, to form a storage unit called a direct access storage device, also called a DASD device. This housing may be sealed, and includes among other items, a motor for rotating the disk assemble, a write/read head assembly in the general shape of a comb for writing data to the disks and for reading data from the disk, a linear or rotary track accessing motor for moving the head assembly, and associated electronic means.

In DASD devices having high track density, it is usual to provide servo tracks on the disk(s). As the head assembly transduces data relative to an addressed one of the disk tracks, the head assembly also reads servo patterns that are provided for that track. A closed loop servomechanism responds to the signal provided by the servo patterns, and operates to control the track accessing motor, so as to maintain the head assembly centered over the addressed track.

Two different types of servo track means are known in the art. In the first type, one of a plurality of disks is dedicated to carrying only servo tracks, while the remaining disks carry data. The disk that is dedicated to servo tracks contains one track for each data cylinder, and the other disks contain a similar number of tracks, one track for each data cylinder. In this first arrangement, a servo head reads a servo track, as a data head reads a data track. All heads are mounted on the same track accessing arm, such that all heads are at all times positioned in the same data cylinder.

In a second type of servo track means, servo patterns or bursts are embedded within the data track, i.e. bursts of servo information are written between, and on opposite sides of, the data sectors of each data track. In this arrangement, a transducing head reads data as it traverses a data sector, and reads both offset servo patterns as it traverses a servo sector. The information thus derived from the servo patterns is used to maintain the head centered over the track.

The present invention pertains to the field of embedded servo tracks.

DASD devices conventionally use a plurality of disks mounted on a rotatable spindle. The disks contain concentric, circular, tracks which are usually circumferentially divided into a number of data sectors, for example eight sectors for one 360 degree revolution of the disk. A portion of each track sector contains one or more recorded bursts of a servo data pattern. This servo pattern comprises track following servo information that is used to ensure that the device's read/write head assembly will correctly transduce an addressed disk track.

During the manufacture of DASD devices, it is conventional to use a complex manufacturing device to write the required servo patterns to the disk tracks. It is conventional practice to write this servo information by the use of a relatively expensive manufacturing device called a servo track writer. This manufacturing step takes place prior to the final assembly, or sealing, of the DASD unit.

More specifically, in a well known servo track writer, the DASD unit being manufactured is clamped onto the servo writer prior to the covers being installed on the DASD unit. A clock head of the servo writer then writes a clock track on one or more of the DASD disks. This clock track later enables the writer to accurately determine circumferential position of the disks, as servo patterns are written in predetermined positions within each track sector. A retroreflector is mounted onto the DASD head access motor. This reflector is used in cooperation with a laser interferometer positioning system to accurately position the head assembly of the servo writer. In this way servo tracks are written on the DASD disks. This manufacturing process produces accurately positioned servo tracks relative to the servo writer's head assembly. After the servo tracks have been written, the DASD unit is unclamped from the writer, and manufacture of the DASD unit is completed.

A problem with this prior procedure is that mechanical processing of the DASD unit after the writing of the servo tracks, as above described, for example the unclamping the DASD unit from the servo writer, distorts the DASD metal casting. The result is that the servo tracks are now no longer concentric with respect to the head assembly of the DASD unit. This distortion tends to degrade later performance of the DASD unit, as is measured in terms of write faults, settle time and head switching time, for example.

United States Patent 4,531,167 is of interest in that it describes a servo writer system for a sealed, Winchester type, disk drive having fixed disks and a removable disk cartridge mounted on this same spindle. A removable master disk cartridge, having a fixed head and a dedicated servo surface, is first mounted on the spindle. Positioning data, clock information, and index information from the master disk cartridge is then used to write the servo surface of the drive. An object of this patent is to write embedded servo information without breaking the seal of a sealed, Winchester type, disk drive.

United States Patent 4,729,048 is of interest in that this patent recognizes that when a magnetic disk is initialized on a formatting system other than a magnetic disk device, it may yield eccentric motion relative to the spindle, when it is later mounted in a magnetic disk system. In the device of this patent, a single head slider carries three heads, i.e. an initial formatting head, a servo control head and a recording and playback head. At least one track is written on the disk using the initial formatting head. This track is then scanned by the servo head, as the third head concomitantly formats another track. This formatting process is repeated until all tracks are recorded. United States Patent 4,642,709 contains a somewhat similar teaching relative to the servo formatting of vertical recording magnetic media.

United States Patent 4,586,094 utilizes a somewhat similar technique to servo format magnetic tape, and it is stated that the technique can be used relative disk technology.

Others have attempted to integrate the use of both a servo writer and the DASD product's head assembly when servo formatting the disks of a DASD unit. United States Patent 4,371,902 is an example. In the device of this patent, the product heads are first used to write a data track at both the inner and outer crash stops. The servo writer heads are then used to read these two tracks. As a result, the reading position of the servo writer heads, both in angular position and in radial position, is determined for these two tracks. This measurement allows a curve to be derived for each product head. These curves determine where each disk track should be written by the servo writer, and at what phase the tracks should be written, in order to produce a pattern which, when subsequently read by the product heads, will appear to have been written by the product heads. These curves are now used to control the servo writer, as the servo writer writes the sector servo information to the various disk tracks.

While the prior art servo writing devices have succeeded in improving the art somewhat, the need still exist to provide further improvement in the manner in which servo tracks are written to the disks of a DASD device.

The present invention provides for the writing of the above mentioned track following servo information after the DASD unit has been completely assembled, by the use of the DASD's internal head assembly (hereinafter sometimes called the product head assembly), thus eliminating the above describe track distortion. The present invention also eliminates the need to use an expensive servo writer during manufacture of a servo formatted DASD unit, i.e. a DASD unit having a closed loop position feedback system for controlling motion of the head assembly access motor or actuator (hereinafter sometimes called the product actuator).

Accordingly the present invention provides a method of recording track servo patterns on the magnetic recording disks of a magnetic disk storage apparatus, wherein the disks are concentrically supported in a stack for rotation on a common spindle and a common head assembly is provided with heads which cooperate with respective surfaces of the disks to read and write data in concentric circular tracks on the disks, the tracks being accessible by movement of the common head assembly and reference servo patterns having been recorded in all the tracks on a reference surface of a reference one of the disks, the method comprising the steps of using the head of the common head assembly which cooperates with the reference surface to read the reference servo patterns, the common head asembly being moved to access and read the reference servo patterns for all the tracks on the reference surface, and applying to the remaining heads of the head assembly the result of reading the reference servo patterns from the reference disk so as to write a track servo pattern for each track of the remaining disks in the stack.

Further according to the present invention there is provided a magnetic storage apparatus comprising a stack of disks concentrically supported in a stack for rotation on a common spindle, a common head assembly having heads which cooperate with respective surfaces of the disks to read and write data in concentric circular tracks on the disks, the tracks being accessible by movement of the common head assembly controlled by servo patterns recorded in the tracks, the servo patterns in the tracks having been written by the heads of the common head assembly in response to the reading of pre-recorded reference servo patterns by one of the heads in the assembly from a reference surface of a reference one of the disks in the stack.

The present invention may take advantage of a disk surface testing procedure that accompanies manufacture of the DASD unit. The disks are, in accordance with a preferred embodiment of the invention, what is known in the art as hard disks, i.e. disks having a rigid substrate. However, flexible or floppy disks can also be used.

As is well known to those of skill in the art, it is conventional practice to full surface test each disk that is to be used in a DASD unit. This testing procedure provides for the writing of data to the entire track surface of the disk, and then reading back the data, to determine if the disk contains any mechanically or magnetically defective track areas. When defective areas are found, the disk may be discarded, or the track sector(s) may be marked as defective and not used during subsequent data processing.

Use may be made of this necessary DASD manufacturing step to write positional information, i.e. the DASD's servo data pattern, on the entire track surface of at least one disk during full surface testing of the disks, in order to form a servo/clock reference surface thereon. This need not be done to all DASD disk surfaces, and in fact need be done to only one surface of one DASD disk, the other surfaces then being conventionally full surface tested as before. The disk reference surface is then used, after the DASD unit has been fully assembled and sealed, to facilitate the writing of servo/clock bursts or patterns to all disk tracks, while using the product actuator. In this way, the above described distortion problems are eliminated. In addition, compensation may be made for any inaccuracy in the radial positioning of the individual product heads relative to a data cylinder (a data cylinder contains the same numbered track from each disk in a stack of disks).

As a feature of the invention, the reference disk surface may contain a continuous recording of servo patterns and clock information, thus enabling the recording to carry information that clocks or measures circumferential position along a track.

In a preferred embodiment of the invention, the DASD product includes a product head assembly that is formed as a comb-like structure having a plurality of individual magnetic transducing heads, wherein a disk extends between adjacent teeth of the comb-like structure, with individual heads being positioned in transducing relation to individual disks, a product track accessing motor for moving the comb-like structure, to thereby locate the comb-like structure at addressed tracks of the disks (i.e. at a data cylinder within the disk stack), a product spindle for supporting the disks in a stack, and a product spindle motor for rotating the product spindle.

The invention can be used to avoid the use of an expensive prior art servo writer by using the step of full surface testing the plurality of disks for magnetic and mechanical integrity prior to placing the disks in a stack within the DASD product.

During this step of full surface testing, a continuous servo/clock pattern is written to all tracks of at least one of the disks being tested.

The DASD unit is now assembled, with the plurality of tested disks located therein as a stack of disks on the product spindle, and with the comb-like structure supporting the individual product heads in transducing relation to the surfaces of the plurality of tested disks.

Servo patterns are then written to the disks of the assembled DASD unit by (1) using the product track accessing motor, and the comb-like structure and individual product heads to read a track of the disk that contains the prewritten servo/clock information, and (2) then using the thus read servo/clock information to drive the individual product heads to servo format the same track of all of the other disks within the stack of disks (i.e. to servo format a data cylinder).

This process is repeated until all tracks of all disks have been servo formatted (i.e. until all data cylinders have been servo formatted).

The step of writing a continuous servo/clock pattern to all tracks of at least one of the disks being tested includes the writing of reference magnetic transition servo patterns and the writing of reference magnetic clock transitions. Thereafter, the writing of servo patterns to the disks of the assembled DASD unit utilizes the clock transitions to accurately measure the circumferential position of the individual product heads along a track, to thereby accurately position servo magnetic transitions at desired circumferential positions of the tracks being written.

As will be appreciated by those skilled in the art, full surface testing of the disks, as above described, can take a variety of forms. For example, a stack of disks may be assembled onto the product spindle before testing, or individually separate disks may be tested, and then the tested disks may be assembled onto the product spindle. In this later case, it is desirable that the servo formatting of all disks within the stack includes compensation for any lack of track eccentricity of the one disk relative to the individual product heads, which eccentricity may result from assembling the disks on the product spindle after the one disk was written.

In the drawings:-
    FIG. 1 is a sectional view of a rigid magnetic disk drive embodying the invention,
    FIG. 2 illustrates a form of disk track format that may be used in the disk drive of FIG. 1,
    FIG. 3 is a side view of a stack of disks in the disk drive shown in FIG. 1.
    FIG. 4 illustrates an embodiment of an electronic network included in the disk drive of Fig. 1 and,
    FIG. 5 shows in flow chart form a method which embodies the present invention.

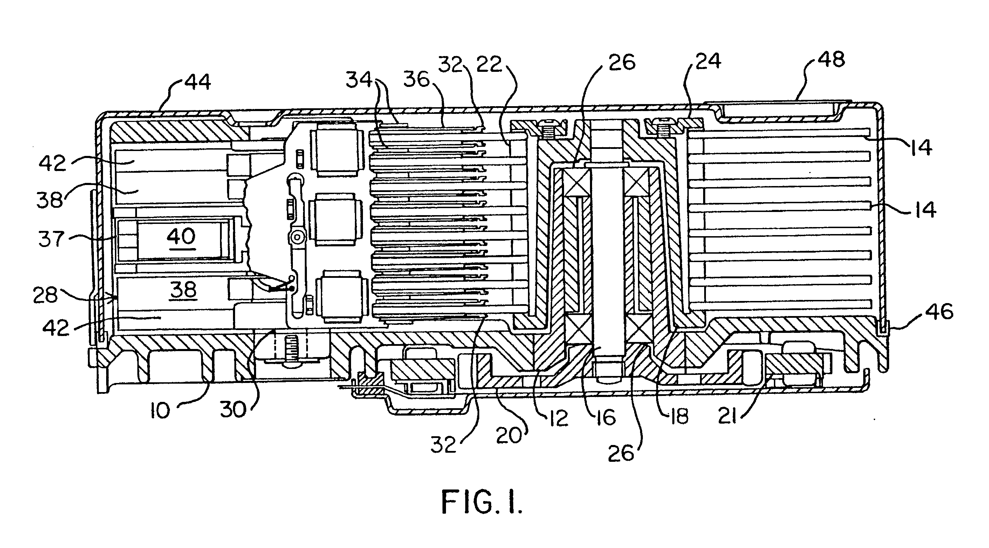

The present invention finds utility with all mechanical configurations of disk drives. In FIG. 1, a sealed disk drive or DASD unit, contains a number of rigid disks 14 that are supported in a vertical stack on a rotatable spindle assembly (18,16,20), and in cooperation with a radially movable motor/head assembly (32,36,34,37).

The disk drive includes a frame 10 having a bearing tower 12 as an integral portion thereof. A spindle assembly 18, 16, 20 supports eight data disks 14 in a vertical stack. The spindle assembly includes a spindle shaft 16 which has a hub 18 secured thereto at the upper end, and which has the rotor portion 20 of a spindle motor 21 secured to the opposite end thereof. Data disks 14 are separated by spacers 22, and are compressively retained on hub 18 by means of a clamp ring 24. The spindle assembly is rotatably supported in bearing tower 12 by bearings 26.

A transducer supporting rotary actuator 28 pivots about the axis of a shaft 30, to position write/read transducer heads 32 over desired addressed tracks on the respective data surfaces of disks 14. Arms 34 carry flexure suspensions 36 on which write/read transducing heads 32 are respectively mounted. Actuator 28 is rotated by movement of a voice coil motor assembly that includes a movable coil 37 that pivots in unison with the head-suspension assembly, and cooperates with permanent magnets 38 and respective inner and outer core elements 40, 42.

A head/disk enclosure is formed about the actuator and disk assembly by frame 10, cover 44 and seal 46. This enclosure or housing entirely surrounds and seals the disk and actuator assemblies, except for bearings 26 through which spindle shaft 16 enters, and except for a breather filter 48. Breather filter 48 is normally positioned to access the interior of the housing at the lowest pressure location, to thereby ensure that all leakage air enters the housing through filter 48, and all uncontrolled leakage that may occur is to the exterior of the housing.

The assembled disk drive of FIG. 1 includes at least one reference recorded surface carried by at least one of the disks 14. This reference surface contains the servo patterns that are required to be recorded on all of the recording surfaces of all disks 14. This disk reference surface is used, after the disk drive has been assembled, to enable the comb-like head assembly, including heads 32, (i.e. the product head assembly) to read the reference surface and to then write the servo patterns on the surfaces of disks 14.

As stated previously, the reference disk surface preferably contains the continuous recording of servo patterns and clock information, thus enabling the reference surface to carry information that clocks or measures circumferential position along a track.

In accordance with the well known practice in the disk drive manufacturing art, disks 14 are full surface tested prior to assembling the disk drive as shown in FIG. 1. The manner in which disks 14 are full surface tested is not a limitation on the invention. For example, a subassembly may be formed of the stack of disks 14, hub 18, shaft 16, motor 21 and frame 10 before full surface testing of the disks occur, or, in the alternative, individually separate disks 14 may be tested, and then the tested disks may be assembled onto hub 18.

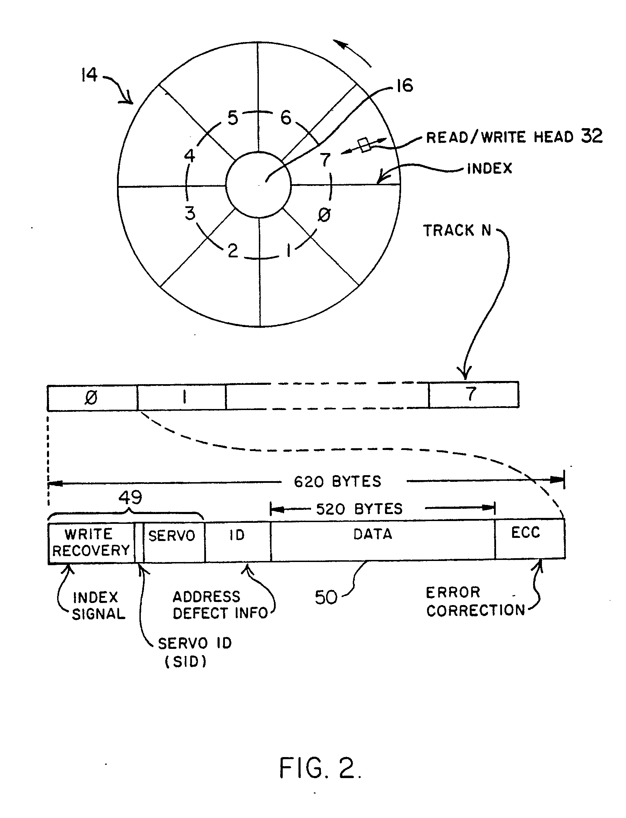

As is well known to those of skill in the art, each of the upper and lower recording surfaces of each disk 14 includes a plurality of circular, concentric, recording tracks. Each track is divided into a number of data sectors about the track's 360 degrees circumference. For example, eight data sectors may be provided in each data track. Each data sector preferably begins with a sector address or identification data (ID) that distinguishes that sector from all other sectors. While the exact data format of a data sector is not critical to this invention, each data sector will include a relatively large circumference track area for the recording of variable user data. Fig. 2 is an example of the composition of one such data track and data sector.

It is well known that since the FIG. 1 DASD unit is of the embedded servo type, each data sector of each data track of each disk includes track following data patterns. These track following patterns may comprise, for example, track following data bursts that are placed on opposite sides of a track centerline and within each data sector of the track. Thus, when a head 32 is properly centered on a disk track, (i.e. when the head is properly following the track following bursts), the head will read equal magnitude signals from both of the track following bursts.

In use, the transducer head assembly is position controlled (by operation of a position control servomechanism, not shown) to position a head 32 over an addressed track by way of servo controlled movement of actuator coil 37. When the head assembly is so positioned, the track following servomechanism operates to read the track's servo bursts, and to control actuator coil 37 in a manner to maintain the head assembly centered over the addressed track.

As a result of this head movement to an addressed track, the transducer head assembly operates to position all heads 32 over the same numbered track of all disks 14. In the art, these same numbered tracks are called a data cylinder. Since the various heads 37 may not in fact lie in a common physical cylinder, a data cylinder may not in fact comprise a true physical cylinder.

The track following servo bursts are written to all tracks of a data cylinder so that head assembly track accessing movement will not be required when data processing requirements result in switching from one head to another head within the same data cylinder.

The manner in which data is stored on the disk(s) of FIG. 1, i.e. the data storage format, is not critical.

FIG. 2 shows a preferred form of disk format, without limitation thereto. In this figure a rotating disk 14 is shown supported by a spindle means 16. Each recording track of disk 14 includes eight data sectors, one circular track of which is identified in the figure as track N. Usually, disk 14 carries such a track N on each of its two planar surfaces. As is well known by those of skill in the art, a DASD unit usually comprises a number of such disks 14, each disk being supported in spaced fashion along the axis of spindle means 16, as shown in FIG. 1. In this case, track N of disk 14 comprises but one track of a cylinder of tracks, each track of the cylinder being carried on one or of the recording surfaces of each disk.

A circumferentially-stationary transducing read/write head 32 is mounted to move generally radially of each disk 14 of the disk stack. As is shown in FIG. 1, all heads 32 for all of the disks within the stack are supported on a comb-like machanism, and this comb-like mechanism is movably mounted to an accessing motor or actuator coil 37, for movement on either an arcuate or a linear path, as is defined by the type of head actuating mechanism used in the DASD unit.

FIG. 2 also shows an exemplary format for sector 0 of track N. The leading portion 49 of sector 0 of each disk track is known as the servo field, and preferably contains a write recovery field, an index or sector mark, a servo identification (SID) field, and a track following servo field. As is well known, servo field 49 contains magnetic transitions that are distinguished from the transitions that are used in customer data field 50. The reading of the index mark portion of field 49 by head 32 enables the disk drive controller (not shown) to determine the position of disk 14 during each rotation of the disk, independent of which track is currently being accessed (i.e. being read or being written) by head 32. A measure of the time that expires between consecutive occurrences of the index mark provides a measure of the speed of rotation of disk 14.

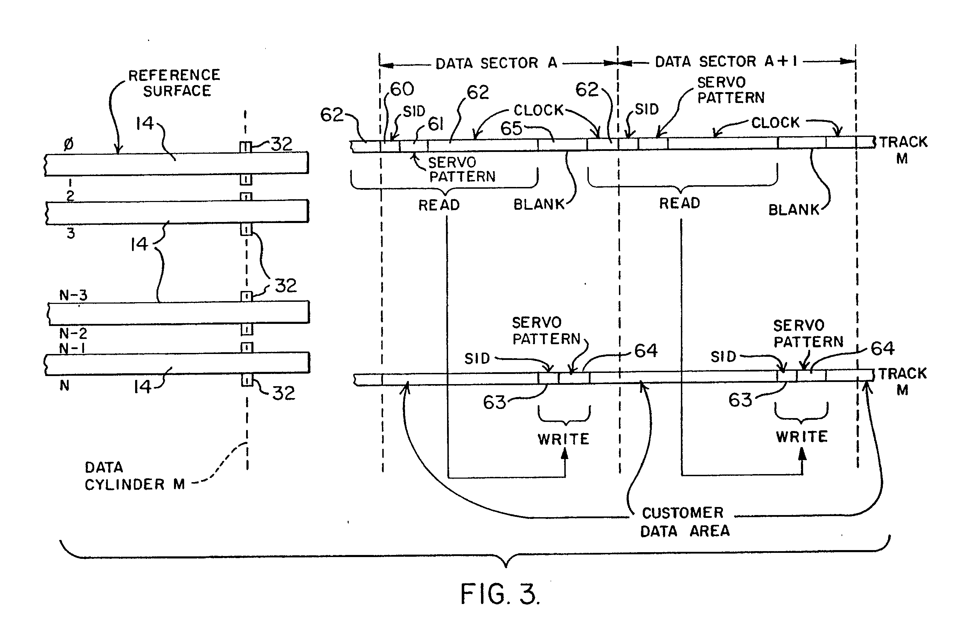

Each sector of each recording track includes other portions, portion 50 of which comprises the data processing system's variable user data. This user data is recorded at a particular cylinder, disk, track and sector, as is identified or addressed by the disk drive controller. FIG. 3 shows a portion of a stack of disks 14 such as is shown in FIG. 1. In FIG. 3 disks 14 are shown as having upper and lower recording surfaces, identified as recording surfaces 0 through N. The head assembly of the DASD unit has been positioned in FIG. 3 to transduce data cylinder M, i.e. each individual head 32 has been positioned to transduce track M on its respective disk recording surface.

In this embodiment of the invention, the upper recording surface 0 of the uppermost disk 14 comprises the reference surface that has been recorded to contain servo/clock information in all of the tracks thereof. Any of the recording surfaces 0-N may comprise the reference surface.

The recorded content of two reference sectors of track M of surface 0, identified as sectors A and A + 1, is shown. In this embodiment of the invention, but without limitation thereto, each sector of surface 0 contains a leading servo identification recorded area (SID area) 60 that is followed by a recorded servo pattern area 61. As stated, servo pattern area 61 may comprise a pair of offset servo patterns that are offset from the center of track M of surface 0. The recording of each sector is completed by two clock transition areas 62 and by an intermediate blank area 65 which may in fact contain clock transitions. Surface 0 has been recorded in this manner during the full surface testing of the stack of disks 14.

Servo identification area 60 and servo pattern area 61 are read in order to identify the circumferential sector position of the DASD's head assembly, and in order to servo control the head assembly to maintain the head assembly over the center of the tracks within data cylinder M. Clock areas 62 are read to determine the circumferential position of the head assembly within the sector being read.

The reading of information 60-62 from reference track M on surface 0 enables one to thereafter write the SID pattern 63 and the track following servo pattern 64 to a displaced circumferential position of track M on a different recording surface, this displaced position corresponding to the head transducing position of the blank portion 65 of track M on surface 0. In FIG. 3 it is shown that SID 63 and servo pattern 64 are written to track M of recording surface N after SID 60 and servo pattern 61 of track M of surface 0 have been read. From this it can be seen that the write function of FIG. 3 can also be used to write SID 63 and servo pattern 64 in the blank area 65 of track M of surface 0.

In a like manner, the reading of the following sector, that is sector A + 1, of reference surface 0, data cylinder M, is operative to write an SID pattern 63 and a servo pattern 64 to the following sector of track M of recording surface N. This process continues until all tracks of data cylinder M have been SID and track following servo formatted, whereupon the process repeats for a different data cylinder, until all tracks of all data cylinders have been formatted in this manner.

In subsequent use, reference surface 0 is used to contain variable user data, and in this process SID, areas 60 servo areas 61 and clock areas 62 of the data sectors are overwritten with the user or customer data.

As stated previously, in the event that disks 14 were individually full surface tested, reading the tracks of reference surface 0 includes the step of computing the eccentricity of these reference tracks, if any. This computation is then used when writing SID and servo patterns 63,64 to the other tracks of the data cylinder, in a manner to insure that these other tracks are written without eccentricity. Once this has been accomplished for each track of a data cylinder, the reference track of that data cylinder is overwritten with SID and servo patterns 63,64 so as to eliminate the measured eccentricity.

By way of example of the manner in which such eccentricity may be compensated for, the product heads 32 are first positioned at a crash stop, and the eccentricity is thereafter measured and computed as the adjacent track of the reference surface is transduced. For example, a sine wave position error may be generated when the servo patterns 61 are read during one revolution of the reference disk. A compensation signal which is the inverse of this position error signal is then generated. This compensation signal is thereafter fed to the servomechanism that controls the radial position of product heads 32. In this way, the product heads are held substantially motionless at the various data cylinders, as the reference surface is read, and as the disk surfaces are formatted, as above described.

When the above mentioned measured position error comprises a complex function of disk rotation, it may be necessary to compute the above mentioned compensation signal by way of an iterative process that operates to minimize access motor current variation during a disk revolution.

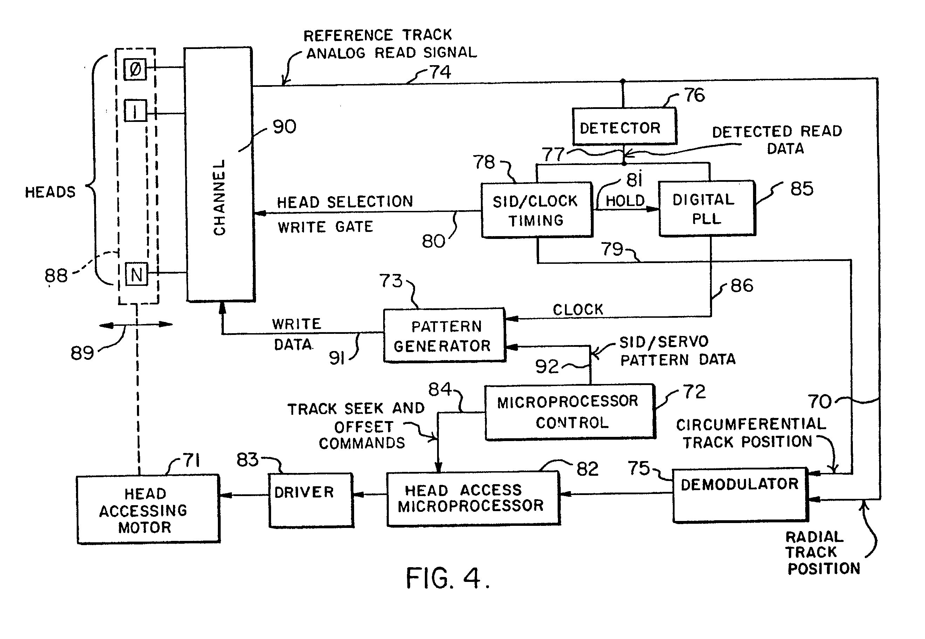

FIG. 4 illustrates an electronic network for use in reading the above described disk reference surface, and for thereafter writing servo patterns to the disk stack as was described relative to FIG. 3.

In FIG. 4, consistent with the FIG. 3 description, head 0 is used to read the reference surface.

The track following servo signal 70 that is thus derived from head 0 and reference surface 0 is used to control head access motor 71 (also see coil 37 of FIG. 1) in order to maintain all of the heads 0-N centered on the tracks of the data cylinder currently being read (perhaps with eccentricity correction, if such correction is needed).

During this process, servo patterns 63,64 are written to other tracks within this data cylinder, under the control of master microprocessor 72 and pattern generator 73.

More specifically, the reading of a reference track, consisting of FIG. 3's servo identification field 60, servo pattern field 61 and clock fields 62, generates an analog read signal on conductor 74. The servo portion 70 of analog signal 74 is provided to demodulator 75. A detector network 76 also receives analog signal 74, and as a result provides detected read data on conductor 77.

Detected read data 77 is connected to an SID and clock timing network 78 having three outputs 79, 80 and 81.

Output 79 from network 78 is associated with track following servomechanism portion of FIG. 4. More specifically, output 79 responds to the circumferential position information within analog read signal 74 (i.e. to SID field 60), and thereby provides an enable signal to demodulator 75, enabling demodulator 75 to respond to the read signal that is provided on conductor 70 at the time that this signal is being provided by the reading of servo pattern field 61.

Head access microprocessor 82, under the control of master microprocessor 72, operates to control driver network 83 and motor 77, so as to maintain head assembly 88, including heads O-N, centered on the reference track and the data cylinder currently being transduced, see bidirectional radial movement arrow 89. As shown in FIG. 4, the output 84 of master microprocessor 72 provides commands relating to the disk track to be transduced, and when offset servo patterns 64 are to be written output 84 also provides commands causing the heads to be alternately positioned to opposite sides of the track centerline as servo bursts are written.

Output 80 from network 78 is associated with the track writing portion 63,64 of FIG. 4. More specifically, network 78 responds to the circumferential position information contained within analog signal 74, and operates to generate a head selection signal (i.e a disk surface selection signal) and a write enable, or write gate, signal on conductor 80 when SID patterns 63 and servo patterns 64 of FIG. 3 are to be written to a disk surface, such as track M of FIG. 3.

The detected read data on conductor 77 is applied to digital phase lock loop (PLL) or variable frequency oscillator (VFO) network 85, in order to generate a continuous clock signal on conductor 86.

Output 81 from network 78 operates to provide a hold signal to network 85.

PLL network 85 uses the clock portion 62 (FIG. 3) of the read data on conductor 77 to correct the phase and/or frequency relationship of clock signal 86. Output 81 from network 87 operates to provide a hold signal that allows PLL network 85 to correct its phase/frequency only when valid clock information is present on conductor 77. As seen from FIG. 3, the phase/frequency of PLL network 85 must be held while the heads are transducing areas 60, 61 and 65, i.e. the track areas corresponding to the non-clock reference areas.

As a result of the operation of timing network 78, pattern generator 73 is controlled to write the SID field 63 and the servo pattern field 64 shown in FIG. 3 to the disk surface track that is selected by the signal present on conductor 84. The specific magnetic transition patterns to be written are presented to channel network 90 by way of conductor 91. The output 92 of master microprocessor 72 enables this microprocessor to control pattern generator 73 in a manner to determine the transitions to be written for each different track and servo field within the track.

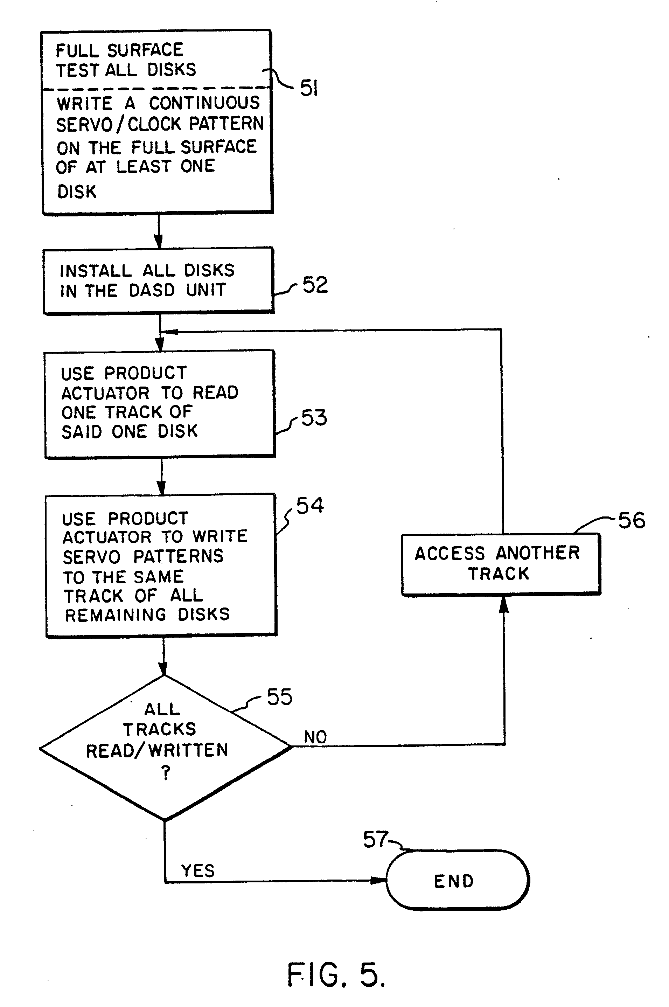

A further embodiment of the invention is illustrated by way of the flow chart showing of FIG. 5. Relative to this construction and arrangement of the invention, the process of FIG. 5 begins with function block 51, whereat all of the disks that are to be used to form a disk stack within a sealed DASD unit are full surface tested for magnetic and mechanical integrity. This is a conventional testing procedure, as is well known to those of skill in the art. However, in accordance with the invention, this process step includes the writing of a continuous servo/clock pattern to all tracks of at least one of the disks being tested.

The present invention finds utility with DASD units having various types of data detection read channels. Thus, the above mentioned servo/clock patterns may be, for example, of the type that are compatible with either amplitude sensitive read channels or phase sensitive read channels.

After this step has been completed, the DASD unit is assembled, with the tested disks thus sealed therein, as is shown by function block 52. At this time, it may be that only the above mentioned one disk contains the servo/clock information required by all tracks of all disks within the DASD unit. At this point in the process of FIG. 5 the plurality of individual heads, making up the DASD's comb-like head assembly, are located in transducing relationship to the plurality of tested disks now within the DASD unit. An exemplary sealed DASD unit may include a disk stack, a head/arm/access motor assembly, read/write preamplifiers mounted on the access arm assembly, a housing or enclosure surrounding the same, and shock mounts attached to the enclosure.

In function block 53 the product actuator, i.e. the DASD's track accessing motor, head assembly and track following servomechanism, are used to read one track of the disk that contains the prewritten servo/clock information written during the full surface testing of the disks in function block 51.

As a result of the information that is derived from the operation of function block 53, function block 54 now operates to copy or write the necessary servo information on the same track of all of the other disks within the stack of disks, i.e. the servo information for a data cylinder is written.

The step of writing the reference disk surface in process step 51 includes not only the placement of reference magnetic transition servo patterns, i.e. patterns or bursts that allow the DASD's track following servo mechanism to maintain the head assembly on the center of an addressed track, but also, process step 51 includes the writing of clock information. This clock information is important in that it allows process step 54 to accurately measure the position of the product head circumferentially along a track, and to thereby accurately position the servo magnetic transition bursts at desired circumferential positions of the tracks being written on the disk surfaces.

As will be appreciated by those skilled in the art, the format of the servo pattern chosen for the DASD device can take a variety of forms.

As stated previously, function block 51 can operate on individually separate disks, or alternatively function block 51 can operate on a stack of disks that have been preassembled onto a spindle and its drive motor, i.e. a spindle assembly. When individual disks are tested, and then assembled onto a spindle as a part of function block 52, function block 54 will also compensate for any lack of track concentricity within the one servo/clock written disk, which eccentricity may result from making the spindle assembly after this one disk was written in the process step of function block 51. However, when a preassembled spindle assembly is processed in the process step of function block 51, such compensation is usually not required.

Decision block 55 now determines if all tracks of the one disk have been read, i.e. have all data cylinders been written with servo information? If this is not the case, function block 56 causes the DASD access motor to move the head assembly to another track, as is determined by reading the servo/clock patterns for that track on the one disk that was so written in the process step of function block 51. The functions of blocks 53,54,55 now repeat, until such time as it is determined that all data cylinders have been formatted with servo information, whereupon the process ends, see block 57.

## Claims

1. A method of recording track servo patterns on the magnetic recording disks 14 of a magnetic disk storage apparatus, wherein the disks are concentrically supported in a stack for rotation on a common spindle 16 and a common head assembly 32, 34, 46, 37 is provided with heads 32 which cooperate with respective surfaces of the disks 14 to read and write data in concentric circular tracks on the disks, the tracks being accessible by movement of the common head assembly and reference servo patterns having been recorded in all the tracks on a reference surface of a reference one of the disks, the method comprising the steps of using the head 32 of the common head assembly which cooperates with the reference surface to read the reference servo patterns, the common head asembly being moved to access and read the reference servo patterns for all the tracks on the reference surface, and applying to the remaining heads of the head assembly the result of reading the reference servo patterns from the reference disk so as to write a track servo pattern for each track of the remaining disks in the stack.

2. A method according to claim 1 wherein the reference surface is surface tested during the writing of the reference servo patterns.

3. A method according to claim 1 or 2 wherein the reference servo patterns are written by the head 32 of the common head assembly which cooperates with the reference disk after the disks have been assembled in the stack on the common spindle.

4. A method according to claim 1 or 2 wherein the reference servo patterns are written on the reference disk before the disks have been assembled in the stack on the common spindle.

5. A method according to claim 4 wherein compensation for eccentricity of the reference disk resulting from assembly of the stack of disks is applied to the common head assembly during writing of the track servo patterns.

6. A magnetic disk storage apparatus comprising a stack of disks 14 concentrically supported in a stack for rotation on a common spindle 16, a common head assembly 32, 34, 36, 37 having heads 32 which co-operate with respective surfaces of the disks 14 to read and write data in concentric circular tracks on the disks 14, the tracks being accessible by movement of the common head assembly 32, 34, 36, 37 controlled by servo patterns recorded in the tracks, the servo patterns in the tracks having been written by the heads 32 of the common head assembly 32, 34, 36, 37 in response to the reading of pre-recorded reference servo patterns by one of the heads 32 in the assembly from a reference surface of a reference one of the disks 14 in the stack.

FIG.I.

EP 0 437 947 A2

14

16

READ/WRITE HEAD 32

INDEX

5 6

4

7

3

2 1

Ø

TRACK N

| Ø | I | | 7 |

620 BYTES

49

520 BYTES

| WRITE RECOVERY | SERVO | ID | DATA | ECC |

INDEX SIGNAL

ADDRESS DEFECT INFO

50

ERROR CORRECTION

SERVO ID (SID)

FIG. 2.

FIG. 3.

FIG. 4.

EP 0 437 947 A2

FULL SURFACE
TEST ALL DISKS
- - - - - - - - - - 51
WRITE A CONTINUOUS
SERVO/CLOCK PATTERN
ON THE FULL SURFACE
OF AT LEAST ONE
DISK

INSTALL ALL DISKS
IN THE DASD UNIT — 52

USE PRODUCT
ACTUATOR TO READ
ONE TRACK OF — 53
SAID ONE DISK

USE PRODUCT — 54
ACTUATOR TO WRITE
SERVO PATTERNS
TO THE SAME
TRACK OF ALL
REMAINING DISKS

ALL
TRACKS — 55
READ/WRITTEN
?

NO → ACCESS ANOTHER TRACK — 56

YES → END — 57

FIG. 5.